# EUROPÄISCHE PATENTSCHRIFT

(11) **EP 1 472 112 B1**
(45) Veröffentlichungstag und Bekanntmachung des Hinweises auf die Patenterteilung: **29.09.2010**
(21) Anmeldenummer: 03706417.7
(22) Anmeldetag: 03.02.2003
(51) Int. Cl.: B60L 9/18, B60L 11/18

(54) **FAHRZEUG MIT BATTERIEFAHRT UND VERFAHREN ZUM BETRIEB EINES SOLCHEN FAHRZEUGES**
VEHICLE COMPRISING A BATTERY DRIVE AND A METHOD FOR OPERATING A VEHICLE OF THIS TYPE
VEHICULE POUVANT FONCTIONNER SUR ACCUMULATEURS ET PROCEDE POUR FAIRE FONCTIONNER UN TEL VEHICULE

(30) Priorität: 07.02.2002 AT 1992002
(43) Veröffentlichungstag der Anmeldung: 03.11.2004
(73) Patentinhaber: Elin Ebg Traction GmbH, 1141 Wien (AT)
(72) Erfinder: GLASL, Markus, A-3105 Unterradlberg (AT); DORNINGER, Martin, A-1020 Wien (AT); JERABEK, Günther, A-1200 Wien (AT); EDER, Matthias, A-1110 Wien (AT); TRENNER, Andreas, A-1140 Wien (AT)
(74) Vertreter: Maier, Daniel Oliver
(86) Internationale Anmeldenummer: PCT/EP2003/001029
(87) Internationale Veröffentlichungsnummer: WO 2003/066368

(56) Entgegenhaltungen:
- EP-A- 0 386 812
- DE-A- 3 029 216
- US-B1- 6 323 608
- PATENT ABSTRACTS OF JAPAN vol. 008, no. 224 (M-331), 13. Oktober 1984 (1984-10-13) & JP 59 106803 A (FUJI DENKI SEIZO KK), 20. Juni 1984 (1984-06-20)

## Beschreibung

Die vorliegende Erfindung betrifft ein Fahrzeug mit einem elektrischen Antrieb, der von einem externen elektrischen Versorgungsnetz versorgt wird, und zumindest einer Batterie, sowie einem Verfahren zum Betrieb eines solchen Fahrzeuges und einem Verfahren zum Umrüsten eines Fahrzeuges mit einem elektrischen Antrieb, der von einem externen elektrischen Versorgungsnetz versorgt wird.

Städtische Nahverkehrs- und Regionalverkehrs-Personentransportmittel, wie Straßenbahnen oder Obusse, werden in der Regel auf keinem eigenen Fahrweg bewegt, sondern werden gemeinsam mit dem Individualverkehr auf dem gleichen Fahrweg, in der Regel eine Straße, betrieben. Diese Transportmittel werden dabei meistens elektrisch angetrieben und über Fahrleitungen, wie z.B. Oberleitungen, mit elektrischer Energie versorgt. Beim Ausfall der Energieversorgung durch ein technisches Gebrechen, z.B. bei einem Leitungsriss oder bei Defekt des Stromabnehmers, etc., besteht die erhebliche Gefahr einer Verkehrsbehinderung, da das Fahrzeug nicht mehr eigenständig weiterbewegt werden kann, was in Städten sehr kritisch ist und durch die Entsehung von Staus im Individualverkehr beträchtliche volkswirtschaftliche Schäden verursachen kann.
Grundsätzlich können solche Transportmittel ohne externe Energieversorgung nicht selbsttätig betrieben werden, was in gewissen Situationen zu Problemen führen kann, wie z.B. das Anfahren bei Stillstand mit Stromabnehmern unter Streckentrennern, oder bei einem Stromausfall. Auch können keine spannungslose Rangierfahrten in der Remise durchgeführt werden, sondern es sind immer teuere Hilfsfahrzeuge erforderlich.

Aus dem Stand der Technik sind dazu sogenannte Hybridfahrzeuge bekannt, die unterschiedliche Energieversorgungen aufweisen, zwischen denen bei Bedarf hin- und hergeschalten werden kann und mit denen der Antrieb des Fahrzeuges bei Bedarf versorgt werden kann. Dabei handelt es sich jeweils um vollwertige Energieversorgungen bzw. einen vollwertigen Antrieb, mit denen das Fahrzeug ohne Einschränkung der Last oder Geschwindigkeit zumindest über eine gewisse Zeitspanne hinweg bewegt werden kann.
Ein solches Fahrzeug ist beispielsweise aus der WO 93/04887 A1 und der WO 00/77918 A1 bekannt. Da die Energieversorgungen bei diesen Fahrzeugen zumindest annähernd gleichwertig sein müssen, sind diese natürlich auch gleichwertig zu dimensionieren, was die Kosten für den Ersatzantrieb und dadurch das Fahrzeug erhöht.
Aus der DE 30 29 216 A geht ein Fahrzeug hervor mit einem Antrieb, für die Gleichspannung der mitgeführten Akkumulatorbatterie ausgelegt ist und nicht für die Spannung des Fahrleitung. Dazu wird die Netzspannung der Fahrleitung zuerst auf diese Spannung herunter transformiert und anschließend gleichgerichtet. Alternativ ist als Spannungsversorgung eine Batterie vorgesehen, wobei der Antrieb des Fahrzeugs aber immer mit der gleichen Spannung versorgt wird.
Die US 6 323 608 A wiederum beschreibt ein Fahrzeug mit einem reinen Batteriebetrieb, bei dem zwei Batterien mit unterschiedlichem Spannungsniveau vorgesehen sind, wobei der Antrieb immer von beiden Batterien (Serienschaltung von 2 Spannungsquellen) gleichzeitig versorgt wird. Ein eigener Controller dient dabei dazu, die bei unterschiedlichen Betriebszuständen auftretenden Ströme entsprechend zu verteilen, was einem Batteriemanagement entspricht bzw. nahe kommt.
Ein weiteres Fahrzeug mit elektrischem Antrieb geht aus der EP 386 812 A hervor, bei dem der Antrieb entweder durch ein externes Netz über einen Umrichter oder direkt durch eine Batterie versorgbar ist. Die Spannung am Ausgang des Umrichters, also die Spannung die auch den Antrieb versorgt, und die Spannung der Batterie haben jedoch gleiches Spannungsniveau. Um die Batterie nicht zu überlasten, ist auch ein Batteriemanagement vorgesehen. Da die Batterie natürlich nur gewisse Amperestunden zur Verfügung hat, wird die mögliche Beschleunigung des Fahrzeugs reduziert, womit der von der Batterie entnommene Strom begrenzt werden kann.

Die vorliegende Erfindung stellt sich deshalb die Aufgabe, ein Fahrzeug anzugeben, dass sowohl im Normalbetrieb, also während der Versorgung über ein externes elektrisches Versorgungsnetz, als auch bei Ausfall des externen Versorgungsnetzes durch eine Hilfsversorgung eigenständig, ohne zusätzliche externe Antriebe bewegt werden kann.

Das erfindungsgemäße Fahrzeug und Verfahren ist dadurch gekennzeichnet, dass der für die Spannung des externen elektrischen Versorgungsnetz ausgelegte elektrische Antrieb bei Wegschaltung bzw. bei einem Ausfall des externen elektrischen Versorgungsnetzes von der Batterie versorgbar ist, wobei die Versorgungsspannung der Batterie maximal 25%, vorzugsweise weniger als 10%, der externen Netzspannung ist und eine Regelungseinheit zur Ansteuerung des elektrischen Antriebs vorgesehen ist, mittels der die durch die veränderte Versorgungsspannung hervorgerufenen geänderten elektrischen Verhältnisse des elektrischen Antriebes im Batteriebetrieb berücksichtigt werden kann.
Damit wird sichergestellt, dass das Fahrzeug auch ohne zusätzliche Hilfsfahrzeuge bzw. ohne zusätzlichen Hilfsantrieb eigenständig bei Wegfall der externen Versorgung bewegt werden kann. Insbesondere sind wesentlich weniger fahrleitungsunabhängige Hilfsfahrzeuge mehr erforderlich, was die Kosten für den Betreiber der Fahrzeuge erheblich reduziert. Versuche in der Praxis haben gezeigt, dass im Betrieb mit der Batterie ungefähr 30% der Normalzugkraft erreichbar sind, was jedenfalls ausreicht, um das Fahrzeug, mit einem Gewicht von mehreren Tonnen, z.B. ca. 45t bei einer typischen Straßenbahn, aus dem Stillstand etwas zu beschleunigen und im Schritttempo weiterzubewegen.
Dieses erfindungsgemäße Fahrzeug kann fast ausschließlich mit den bereits vorhandenen Standardkomponenten umgesetzt werden, wodurch die technische Realisierung einfach und die Zusatzkosten vernachlässigbar sind.
Darüber hinaus können dadurch billige Standardbatterien, z.B. mit einer Nennspannung von 24V, eingesetzt werden.

Ganz besonders vorteilhaft ist es, wenn die Batterie, die im Normalbetrieb zur Versorgung des Bordnetzes des Fahrzeuges, wie beispielsweise der Steuerelektronik des Fahrzeuges, etc., vorgesehen ist, zur Versorgung des elektrischen Antriebes verwendet wird. Jedes Fahrzeug hat in der Regel eine bordeigene Batterie, die zur Versorgung der grundlegenden Steuerfunktionen des Fahrzeuges, wie z.B. des allgemeinen Steuersystems, das Heben und Senken des Stromabnehmers, der Fahrzeugbeleuchtung, etc., verwendet wird. Diese bestehende Batterie kann nun direkt als Versorgung für den elektrischen Antrieb verwendet werden, ohne zusätzliche weitere Batterien vorzusehen.

Wenn zumindest ein Trennschalter vorgesehen ist, mittels dem der elektrische Antrieb vom externen elektrischen Versorgungsnetz trennbar und mit der Batterie verbindbar ist, kann das Umschalten von externer Energieversorgung auf Batterieversorgung besonders einfach durchgeführt werden.

Ein elektrischer Antrieb der Ausführungsform Leistungsteil, insbesondere ein Wechselrichter, mit Elektromotor, insbesondere ein Asynchronmotor, eignet sich ganz besonders vorteilhaft für diese spezielle Anwendung. Bei einer Änderung der Versorgung muss lediglich der Wechselrichter anders angesteuert werden, alles andere kann unverändert beibehalten werden.

Bei einer Änderung der elektrischen Versorgung des Antriebes ändern sich die elektrischen Verhältnisse des elektrischen Antriebes, die vorteilhaft mittels einer Regelungseinheit zur Ansteuerung des elektrischen Antriebes berücksichtigt werden.
Eine Batterie (z.B. mit 24V Nennspannung) weist in der Regel eine deutlich geringere verfügbare Spannung auf, wie ein elektrisches Versorgungsnetz (z.B. ein 600V Netz). Dadurch müssen die Spannungsabfälle an den Halbleitern, wie Dioden und Transistoren des Leistungsteils, sowie Offsetfehler bei der Spannungsmessung im Zwischenkreis des Leistungsteils berücksichtigt werden, um den für den Antrieb erforderlichen magnetischen Fluss zu erreichen.
Dies lässt sich sehr vorteilhaft umsetzen, wenn die Regelungseinheit zur Kompensation des Fehlers in der Magnetisierung des Elektromotors des elektrischen Antriebes ausgeführt ist. Dadurch ist die Regelung in der Lage die optimale Magnetisierung auch bei vollkommen geänderten elektrischen Bedingungen sicherzustellen.

Der Einsatz der in der Batterie verfügbaren gespeicherte Energie wird durch eine Batteriemanagementeinheit vorteilhaft optimiert.
Diese Optimierung erfolgt in günstiger Weise hinsichtlich einer Leistungsbegrenzung, mit der sichergestellt wird, dass der zulässige Batteriestrom nicht überschritten wird, und/oder einer Sollmomentenbegrenzung, mit der sowohl Traktion bis zur Erschöpfung der Batterie, als auch eine Restverfügbarkeit der Steuerspannung am Fahrzeug gewährleistet wird.
Dabei ist auch zu berücksichtigen, dass es durch den inneren Spannungsabfall der Batterie eine starke Rückwirkung des Batteriestromes auf die Spannung des Elektromotors gibt ("weiche" Spannungsversorgung im Gegensatz zum relativ starren externen elektrischen Versorgungsnetz), welcher zudem vom Ladezustand der Batterie abhängig ist. Dadurch ändert sich die Dynamik des Antriebes.

Das Verfahren zum Umrüsten eines Fahrzeuges mit einem elektrischen Antrieb, ist dadurch gekennzeichnet, dass ein Trennschalter eingebaut wird, der einerseits mit zumindest einer vorhandenen oder gegebenenfalls nachzurüstenden Batterie und andererseits mit dem Leistungsteil, z.B. ein Wechselrichter, des elektrischen Antriebs verbunden wird und die Regelungseinheit erforderlichenfalls ausgetauscht oder aktualisiert wird. Weiters wird vorteilhaft eine eigene Batteriemanagementeinheit installiert, um die Batterie optimal nutzen zu können, wobei diese Batteriemanagementeinheit auch in der Regelungseinheit integriert sein kann.
Da im wesentlichen, außer dem Trennschalter, nur bereits vorhandene Komponenten des Fahrzeuges verwendet werden, können bestehende Fahrzeuge auch ohne großen Aufwand umgerüstet werden. In der Regel muss nur ein Schalter eingebaut und die Regelungssoftware und/oder -hardware aktualisiert werden, um auch den Fall der Versorgung des Antriebes über die Batterien abdecken zu können.

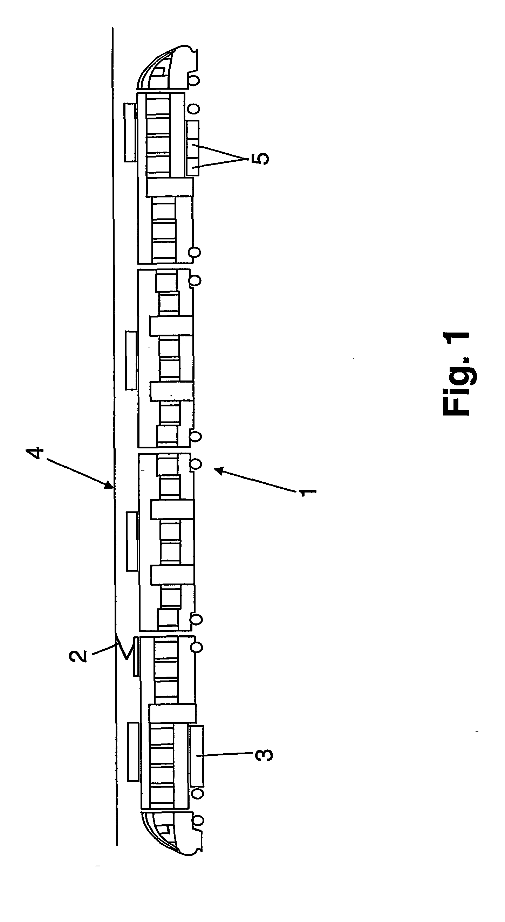

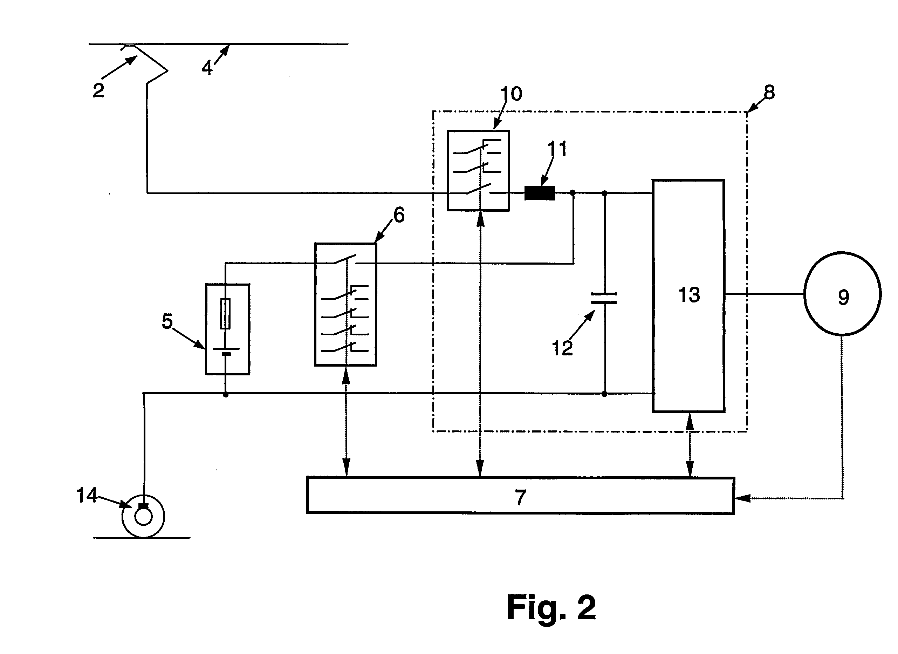

Die gegenständliche Erfindung wird anhand der beispielhaften, nicht einschränkenden, ein spezielles Ausführungsbeispiel zeigenden Figuren 1 und 2 beschrieben, dabei zeigt
Fig. 1 eine schematische Darstellung eines erfindungsgemäßen Fahrzeuges und
Fig. 2 ein schematisches Schaltbildes des elektrischen Antriebes des Fahrzeuges.

Ein elektrisch angetriebenes Fahrzeug 1, gemäß Fig. 1, hier eine Straßenbahn, wird durch ein nicht näher dargestelltes externes elektrisches Versorgungsnetz, hier ein 600V Netz, über eine Oberleitung 4 mit elektrischer Energie versorgt. Der Abgriff der elektrischen Energie erfolgt in hinlänglich bekannter Weise mittels eines Stromabnehmers 2. Der elektrische Antrieb 3 besteht in dieser Ausgestaltung beispielsweise, wie in Fig. 2 angedeutet, aus einem Elektromotor 9, hier ein Asynchronmotor, und kann bei Bedarf auch ein Getriebe beinhalten, sowie einem Wechselrichter 13, als Leistungsteil 8, der den Elektromotor 9 ansteuert. Eine Regelungseinheit 7 regelt den gesamten elektrischen Antrieb 3. Weiters sind, wie hinlänglich bekannt, bordeigene Bordnetzbatterien 5, hier 24V Batterien, vorgesehen, die wichtige Teile des Fahrzeuges 1, wie die Steuerelektronik oder die Grundbeleuchtung des Fahrzeuges 1, etc., unabhängig vom externen Versorgungsnetz mit elektrischer Energie versorgen.

Das oben beschriebene Fahrzeug 1 ist natürlich nur als Beispiel zu sehen. Insbesondere können die einzelnen Komponenten an beliebigen anderen Stellen des Fahrzeuges 1 angeordnet sein, z.B. könnten anstelle von Oberleitungen 4 auch seitliche Schleifkontakte vorgesehen sein, und die einzelnen Komponenten können selbstverständlich auch mehrfach, z.B. ein Fahrzeug 1 mit zwei Antrieben 3, vorhanden sein. Der Antrieb 3 ist bei vielen Ausführungsvarianten auch direkt im Drehgestell des Fahrzeuges 1 untergebracht.

Im Normalbetrieb wird der elektrische Antrieb 3 des Fahrzeuges 1 vom externen elektrischen Versorgungsnetz mit elektrischer Energie versorgt. Die Batterien 5 versorgen dabei gegebenenfalls lediglich die Steuerelektronik und andere Komponenten des Fahrzeuges 1 und können bei Bedarf über das externe elektrische Versorgungsnetz aufgeladen werden.

Im Falle, dass das externe Versorgungsnetz ausfällt, z.B. durch eine Leitungsunterbrechung, oder einen Stromausfall, oder das Fahrzeug 1 in einem Bereich ohne externes Versorgungsnetz betrieben werden soll, wie z.B. in einer Remise, waren bisher fahrleitungsunabhängige Hilfsfahrzeuge notwendig, um das Fahrzeug weiterbewegen zu können.
Das erfindungsgemäße Fahrzeug 1 gemäß Fig. 2 weist nun einen Trennschalter 6 auf, der in solchen Fällen den Wechselrichter 13 des elektrischen Antriebes 3 an die Bordnetzbatterien 5 schaltet. Das Fahrzeug 1 wird also nicht mehr durch das externe Versorgungsnetz mit elektrischer Energie versorgt, sondern durch die bereits vorhandenen bordeigenen Bordnetzbatterien 5.
Durch die wesentlich geringere Versorgungsspannung, hier 24V anstatt der 600V für die der Antrieb 3 ausgelegt ist, ergeben sich beim Umschalten völlig andere elektrische Bedingungen, z.B. wirken sich parasitäre Effekte bei kleiner Spannung dramatisch aus, die von der Regelungseinheit 7 ausgeglichen werden könnten. Z.B. könnten die Spannungsabfälle an den Transistoren und Dioden des Wechselrichters 13 berücksichtigt werden und der Fehler in der Magnetisierung des Elektromotors 9 kompensiert werden, um den für den Betrieb erforderlichen magnetischen Fluss zu erreichen.
Weiters kann eine eigene Batteriemanagementeinheit, die auch die Regeleinheit 7 sein könnte, vorgesehen werden, da die Batterien 5 nur über ein beschränktes Maß an Energie verfügen, das optimal ausgenutzt werden sollte. Dazu könnte zum Einen eine Leistungsbegrenzung vorgesehen werden, da jede Batterie nur mit einem bestimmten maximalen Batteriestrom belastet werden sollte und um eine Tiefenentladung der Batterie 5 zu verhindern, und zum Anderen soll ein maximales Antriebsmoment erreicht werden. Durch das Batteriemanagement wird sowohl Traktion bis zur Erschöpfung der Batterie 5, als auch eine Restverfügbarkeit der Steuerspannung am Fahrzeug 1 gewährleitstet.

Es ist selbstverständlich denkbar eine beliebige Anzahl der vorhandenen Bordnetzbatterien 5 für die Versorgung des elektrischen Antriebes 3 zu verwenden, oder auch mehrere Antriebe 3 des Fahrzeuges 1 auf diese Weise auszustatten.

In diesem speziellen Ausführungsbeispiel besteht der Leistungsteil 8 aus einem Wechselrichter 13, der an einem Zwischenkreiskondensator 12 hängt und über einen Hauptschütz 10 und eine Netzdrossel 11 mit dem externen Versorgungsnetz verbunden ist. Bei einem Ausfall wird der mittels der Regelungseinheit 7 der Hauptschütz 10 geöffnet und der Trennschalter 6 geschlossen, wodurch der Leistungsteil 8 somit von der Batterie 5 versorgt wird. Die Erdung erfolgt in diesem Beispiel über einen Raderdkontakt 14.

Grundsätzlich sind aber auch beliebige andere Schaltungen möglich, z.B. eine zweipolige Ausführung des Trennschalters 6 wenn der Batteriekreis anders geerdet ist, oder Verwendung eines anderen Leistungsteils 8 bei dem Hauptschütz 10 und Netzdrossel 11 nicht im Stromrichter integriert sind, usw.

## Patentansprüche

1. Fahrzeug mit einem elektrischen Antrieb (3), der von einem externen elektrischen Versorgungsnetz, z.B. ein 600V Netz, versorgt wird, und zumindest einer Batterie (5), z.B. mit 24V Nennspannung, **dadurch gekennzeichnet, dass** der für die Spannung des externen elektrischen Versorgungsnetz ausgelegte elektrische Antrieb (3) bei Wegschaltung bzw. bei einem Ausfall des externen elektrischen Versorgungsnetzes von der Batterie (5) versorgbar ist, wobei die Versorgungsspannung der Batterie (5) maximal 25%, vorzugsweise weniger als 10%, der externen Netzspannung ist und dass eine Regelungseinheit (7) zur Ansteuerung des elektrischen Antriebs (3) vorgesehen ist, mittels der die durch die veränderte Versorgungsspannung hervorgerufenen geänderten elektrischen Verhältnisse des elektrischen Antriebes (3) im Batteriebetrieb berücksichtbar sind.

2. Fahrzeug nach Anspruch 1, **dadurch gekennzeichnet, dass** die Batterie (5) im Normalbetrieb zur Versorgung des Bordnetzes des Fahrzeuges (1), wie beispielsweise der Steuerelektronik des Fahrzeuges (1), etc., vorgesehen ist.

3. Fahrzeuge nach Anspruch 1 oder 2, **dadurch gekennzeichnet, dass** zumindest ein Trennschalter (6) vorgesehen ist, mittels dem der elektrische Antrieb (3) vom externen elektrischen Versorgungsnetz trennbar und mit der Batterie (5) verbindbar ist.

4. Fahrzeug nach einem der Ansprüche 1 bis 3, **dadurch gekennzeichnet, dass** der elektrische Antrieb (3) mittels einem Leistungsteil, insbesondere ein Wechselrichter (8), und einem Elektromotor (9), insbesondere ein Asynchronmotor, ausgeführt ist.

5. Fahrzeug nach Anspruch 4, **dadurch gekennzeichnet, dass** die Regelungseinheit (7) zur Kompensation des Fehlers in der Magnetisierung des Elektromotors (9) des elektrischen Antriebes (3) ausgeführt ist.

6. Fahrzeug nach einem der Ansprüche 1 bis 5, **dadurch gekennzeichnet, dass** eine Batteriemanagementeinheit vorgesehen ist, mit der der Einsatz der in der Batterie (5) verfügbaren gespeicherten Energie optimierbar ist.

7. Fahrzeug nach Anspruch 6, **dadurch gekennzeichnet, dass** in der Batteriemanagementeinheit eine Leistungsbegrenzung vorgesehen ist.

8. Fahrzeug nach Anspruch 6 oder 7, **dadurch gekennzeichnet, dass** in der Batteriemanagementeinheit eine Sollmomentenbegrenzung vorgesehen ist.

9. Verfahren zum Betrieb eines Fahrzeuges (1) mit einem elektrischen Antrieb (3), der von einem externen elektrischen Versorgungsnetz versorgt wird, **dadurch gekennzeichnet, dass** der für die Spannung des externen elektrischen Versorgungsnetz ausgelegte elektrische Antrieb (3) bei Wegschaltung bzw. bei einem Ausfall des externen elektrischen Versorgungsnetzes auf einen Batteriebetrieb umgeschaltet wird, wobei die Versorgungsspannung der Batterie (5) mit maximal 25%, vorzugsweise weniger als 10%, der externen Netzspannung gewählt wird und zur Ansteuerung des elektrischen Antriebes (3) die durch die wesentlich veränderte Versorgungsspannung hervorgerufenen geänderten elektrischen Verhältnisse des elektrischen Antriebes (3) im Batteriebetrieb berücksichtigt werden

10. Verfahren nach Anspruch 9, **dadurch gekennzeichnet, dass** das Bordnetz des Fahrzeuges (1), wie beispielsweise der Steuerelektronik des Fahrzeuges (1), etc., im Normalbetrieb von der Batterie (5) versorgt wird.

11. Verfahren nach Anspruch 9 oder 10, **dadurch gekennzeichnet, dass** der Fehler in der Magnetisierung des Elektromotors (9) des elektrischen Antriebes (3) kompensiert wird.

12. Verfahren nach einem der Ansprüche 9 bis 11, **dadurch gekennzeichnet, dass** der Einsatz der in der Batterie (5) verfügbare gespeicherte Energie, vorzugsweise hinsichtlich der Leistungsausnutzung, optimiert wird.

13. Verfahren nach Anspruch 12, **dadurch gekennzeichnet, dass** die aus der Batterie (5) entnommene Leistung begrenzt wird.

14. Verfahren nach Anspruch 12 oder 13, **dadurch gekennzeichnet, dass** das Sollmoment des Elektromotors (9) des elektrischen Antriebes (3) begrenzt wird.

15. Verwendung des Fahrzeuges (1) nach einem der Ansprüche 1 bis 8 als schienen- oder nicht schienengebundenes Nahverkehr oder Regionalverkehr-Personentransportmittel, vorzugsweise eine Straßenbahn oder ein Oberleitungsomnibus bzw. eine U-Bahn.

16. Verfahren zum Umrüsten eines Fahrzeuges (1) mit einem elektrischen Antrieb (3), der von einem externen elektrischen Versorgungsnetz versorgt wird, **dadurch gekennzeichnet, dass**
- an einer geeigneten Stelle des Fahrzeuges (1) ein Trennschalter (6) eingebaut wird, der einerseits mit zumindest einer vorhandenen oder gegebenenfalls nachzurüstenden Batterie (5) und andererseits mit dem Leistungsteil (8), z.B. ein Wechselrichter (13), des elektrischen Antriebs (3) verbunden wird und dass
- eine Regelungseinheit (7) zur Ansteuerung des Leistungsteiles, z.B. ein Wechselrichter (8), des elektrischen Antriebes (3) erforderlichenfalls ausgetauscht oder aktualisiert wird.

17. Verfahren nach Anspruch 16, **dadurch gekennzeichnet, dass** eine Batteriemanagementeinheit installiert wird, die den Einsatz der Batterie (5) optimiert.

## Claims

1. Vehicle having an electrical drive (3), which is supplied by an external electrical power supply system, e.g. a 600 V system, and at least one battery (5), e.g. with 24V nominal voltage, **characterized in that** the electrical drive (3) configured for the voltage of the external electrical power supply system can be supplied by the battery (5) in the case of a disconnection and/or in the event of failure of the external electrical power supply system, with the supply voltage of the battery (5) being a maximum of 25%, preferably less than 10%, of the external mains voltage and that a control unit (7) is provided for controlling the electrical drive (3), by means of which the electrical ratios of the electrical drive (3) which are changed as a result of the changed supply voltage can be taken into account during the battery operation.

2. Vehicle according to claim 1, **characterized in that** the battery (5) is provided in normal operation to supply the onboard electrical system of the vehicle (1), like for instance the electronic control system of the vehicle (1) etc.

3. Vehicle according to claim 1 or 2, **characterized in that** at least one disconnecting switch (6) is provided, by means of which the electrical drive (3) can be disconnected from the external electrical power supply system and can be connected to the battery (5).

4. Vehicle according to one of claims 1 to 3, **characterized in that** the electrical drive (3) is embodied by means of a power element, in particular an inverter (8), and an electric motor (9), in particular an asynchronous motor.

5. Vehicle according to claim 4, **characterized in that** the control unit (7) is embodied to compensate for the error in the magnetisation of the electric motor (9) of the electrical drive (3).

6. Vehicle according to one of claims 1 to 5, **characterized in that** a battery management unit is provided, with which the use of the stored energy available in the battery (5) can be optimised.

7. Vehicle according to claim 6, **characterized in that** a power limitation is provided in the battery management unit.

8. Vehicle according to claim 6 or 7, **characterized in that** a desired torque limitation is provided in the battery management unit.

9. Method for operating a vehicle (1) having an electrical drive (3), which is supplied by an external electrical power supply system, **characterized in that** the electrical drive (3) configured for the voltage of the external electrical power supply system is switched to a battery operation in the event of a disconnection and/or in the event of a failure of the external electrical power supply system, with the selected supply voltage of the battery (5) amounting to a maximum of 25%, preferably less than 10% of the external mains voltage and in order to control the electrical drive (3), the changed electrical ratios of the electrical drive (3) which are produced as a result of the significantly changed supply voltage being taken into consideration during the battery operation.

10. Method according to claim 9, **characterized in that** the onboard electrical system of the vehicle (1), like for instance the electronic control system of the vehicle (1) etc. is supplied by the battery (5) during normal operation.

11. Method according to claim 9 or 10, **characterized in that** the error in the magnetisation of the electric motor (9) of the electrical drive (3) is compensated.

12. Method according to one of claims 9 to 11, **characterized in that** the use of the stored energy available in the battery (5) is optimised, preferably in respect of the power usage.

13. Method according to claim 12, **characterized in that** the power received from the battery (5) is limited.

14. Method according to claim 12 or 13, **characterized in that** the desired torque of the electric motor (9) of the electrical drive (3) is limited.

15. Use of the vehicle (1) as claimed in one of claims 1 to 8 as a rail-mounted or non rail-mounted local or regional means of transport, preferably a tram or a trackless trolley and/or an underground railway.

16. Method for retrofitting a vehicle (1) with an electrical drive (3), which is supplied by an external electrical power supply system, **characterized in that**
- a disconnecting switch (6) is integrated at a suitable point in the vehicle (1), said disconnecting switch being connected on the one hand to at least one existing battery or if necessary battery to be retrofitted and on the other hand to the power element (8), e.g. an inverter (13) of the electrical drive (3) and that
- a control unit (7) is if necessary exchanged or updated in order to control the power element, e.g. an inverter (8) of the electrical drive (3).

17. Method according to claim 16, **characterized in that** a battery management unit is installed, which optimises the use of the battery (5).

## Revendications

1. Véhicule comprenant un entraînement ( 3 ) électrique qui est alimenté par un réseau extérieur d'alimentation électrique, par exemple par un réseau de 600V, et au moins un accumulateur ( 5 ) ayant, par exemple une tension nominale de 24V, **caractérisé en ce que** l'entraînement ( 3 ) électrique conçu pour la tension du réseau extérieur de l'alimentation électrique peut être alimenté par l'accumulateur ( 5 ) lors d'une déconnexion ou d'une panne du réseau extérieur d'alimentation électrique, la tension d'alimentation de l'accumulateur ( 5 ) représentant au maximum 25%, de préférence moins de 10% de la tension du réseau extérieur et **en ce qu'**il est prévu une unité ( 7 ) de régulation pour commander l'entraînement ( 3 ) électrique, au moyen de laquelle les conditions électriques modifiées de l'entraînement ( 3 ) électrique, provoquées par la modification de la tension d'alimentation, peuvent être prises en compte dans le fonctionnement sur l'accumulateur.

2. Véhicule suivant la revendication 1, **caractérisé en ce que** l'accumulateur ( 5 ) est prévu en fonctionnement normal pour l'alimentation du réseau de bord du véhicule ( 1 ), comme par exemple l'électronique de commande du véhicule ( 1 ), etc.

3. Véhicule suivant la revendication 1 ou 2, **caractérisé en ce qu'**il est prévu au moins un sectionneur ( 6 ), au moyen duquel l'entraînement ( 3 ) électrique peut être séparé du réseau extérieur d'alimentation électrique et être relié à l'accumulateur ( 5 ).

4. Véhicule suivant l'une des revendications 1 à 3, **caractérisé en ce que** l'entraînement ( 3 ) électrique est réalisé au moyen d'une partie de puissance, notamment d'un onduleur ( 8 ), et d'un moteur ( 9 ) électrique, notamment d'un moteur asynchrone.

5. Véhicule suivant la revendication 4, **caractérisé en ce que** l'unité ( 7 ) de régulation est réalisée pour la compensation de l'erreur de la magnétisation du moteur ( 9 ) électrique dans l'entraînement ( 3 ) électrique.

6. Véhicule suivant l'une des revendications 1 à 5, **caractérisé en ce qu'**il est prévu une unité de gestion de l'accumulateur, par laquelle l'utilisation de l'énergie emmagasinée et disponible dans l'accumulateur ( 5 ) peut être optimisée.

7. Véhicule suivant la revendication 6, **caractérisé en ce qu'**il est prévu une limitation de puissance dans l'unité de gestion de l'accumulateur.

8. Véhicule suivant la revendication 6 ou 7, **caractérisé en ce qu'**il est prévu une limitation de couple de consigne dans l'unité de gestion de l'accumulateur.

9. Procédé pour faire fonctionner un véhicule ( 1 ) ayant un entraînement ( 3 ) électrique qui est alimenté par un réseau extérieur d'alimentation électrique, **caractérisé en ce que** l'entraînement ( 3 ) électrique conçu pour la tension du réseau extérieur d'alimentation électrique est commuté, lors d'une déconnexion ou d'une panne du réseau extérieur d'alimentation électrique, sur un fonctionnement sur accumulateur, la tension d'alimentation de l'accumulateur ( 5 ) représentant au maximum 25%, de préférence moins de 10% de la tension du réseau extérieur et, pour la commande de l'entraînement ( 3 ) électrique, les conditions électriques modifiées de l'entraînement ( 3 ) électrique, provoquées par la modification sensible de la tension d'alimentation, sont prises en compte dans le fonctionnement sur l'accumulateur.

10. Procédé suivant la revendication 9, **caractérisé en ce que** l'on alimente le réseau de bord du véhicule ( 1 ), comme par exemple l'électronique de commande du véhicule etc...., en fonctionnement normal par l'accumulateur ( 5 ).

11. Procédé suivant la revendication 9 ou 10, **caractérisé en ce que** l'on compense l'erreur de magnétisation du moteur ( 9 ) électrique de l'entraînement ( 3 ) électrique.

12. Procédé suivant l'une des revendications 9 à 11, **caractérisé en ce que** l'on optimise l'utilisation d'énergie emmagasinée disponible dans l'accumulateur ( 5 ), de préférence en ce qui concerne l'accumulation de la puissance.

13. Procédé suivant la revendication 12, **caractérisé en ce que** l'on limite la puissance prélevée de l'accumulateur ( 5 ).

14. Procédé suivant la revendication 12 ou 13, **caractérisé en ce que** l'on limite le couple de consigne du moteur ( 9 ) électrique de l'entraînement ( 3 ) électrique.

15. Utilisation du véhicule ( 1 ) suivant l'une des revendications comme moyen de transport de personnes pour le trafic de banlieue ou le trafic régional, ferroviaire ou non lié à la voie, de préférence comme tramway ou comme trolleybus ou comme métropolitain.

16. Procédé de rééquipement d'un véhicule ( 1 ) comprenant un entraînement ( 3 ) électrique qui est alimenté par un réseau extérieur d'alimentation électrique, **caractérisé en ce que**
- Il est monté en un emplacement approprié du véhicule ( 1 ) un sectionneur ( 6 ) qui, d'une part, est relié à au moins un accumulateur ( 5 ) présent ou, le cas échéant, à mettre ultérieurement et, d'autre part, à la partie ( 8 ) de puissance, par exemple à un onduleur ( 13 ) de l'entraînement ( 3 ) électrique et **en ce que**
- une unité ( 7 ) de régulation est si nécessaire remplacée ou mise à jour pour la commande de la partie de puissance, par exemple d'un onduleur ( 8 ) de l'entraînement ( 3 ) électrique.

17. Procédé suivant la revendication 16, **caractérisé en ce que** l'on installe une unité de gestion de l'accumulateur, qui optimise l'utilisation de l'accumulateur ( 5 ).
